# EUROPEAN PATENT APPLICATION

(11) **EP 4 382 499 A1**
(43) Date of publication of application: **12.06.2024**
(21) Application number: 23207527.5
(22) Date of filing: 02.11.2023
(51) Int. Cl.: C04B 26/04, C04B 26/26, C04B 14/28, E04F 15/02, C08K 3/26, C04B 111/60

(54) **ECO-SUSTAINABLE COVERING MATERIAL FOR FLOORINGS**

(30) Priority: 04.11.2022 IT 202200022722
(71) Applicant: Mondo S.P.A., 12051 Alba Frazione Gallo (Cuneo) (IT)
(72) Inventor: NEDI, Irma, 12051 Alba (CN) (IT); MARENGHI, Andrea, 12051 Alba (CN) (IT); STROPPIANA, Maurizio, 12051 Alba (CN) (IT)
(74) Representative: Cesa, Roberta

(57) **Abstract**

A floor covering material comprising i) at least one elastomer, and ii) a biogenic reinforcing filler comprising calcium carbonate particles in the form of aragonite.

## Description

### Technical field

The present disclosure relates to covering materials that can be used for making floorings. One or more embodiments may be applied, for example, to covering materials for making resilient floorings.

### Technological background

The term "Resilient Flooring" or "Resilient Floor Covering" is intended to indicate types of flooring referred to as such, for example, in the European standards referred to hereinafter. In particular, resilient floorings made of rubber for non-sports applications are regulated by the European standard EN14041. Resilient floorings for sports use are regulated by the standard EN14904 for indoor applications and the standard EN14877 for outdoor applications. Hence, these are, in the current acceptation of the term, resilient floorings generally divided into three main families according to the materials of which they are made, namely: i) floorings comprising polyvinyl chloride (PVC); ii) floorings comprising linoleum; iii) floorings comprising natural and/or synthetic rubber, or thermoplastic rubbers, for example, styrenic block copolymers (TPS or TPE-s), polyolefins, thermoplastic elastomers (TPO or TPE-o), thermoplastic vulcanizates (TPV or TPE-v), thermoplastic polyurethanes (TPU), thermoplastic copolyester (TPC or TPE-E), thermoplastic polyamides (TPA or TPE-A), non-classified thermoplastic elastomers (TPZ).

Resilient floorings are very widespread, in particular in health structures, schools, gymnasia, public premises, and dwellings. These are versatile products that are easy to apply, also by being laid on already existing floors. Resilient floorings are generally impermeable, comfortable to contact, sound-proofed, partially recyclable, reusable, hygienic, and anti-slip.

In the production of covering materials (and in particular materials for floorings) of the type described it is necessary to take into account requirements of various nature, for example economic requirements, requirements of eco-sustainability, and requirements of mechanical properties, which are frequently in effect in contrast with one another.

In particular, elastomer-based covering materials that can be used for making resilient floorings may require the presence of fillers for the purpose of increasing the density and dimensional stability of the material and optimizing the mechanical characteristics.

The fillers used in resilient floorings made of rubber may be of an organic nature (wood flour, cellulose fibres) or else of an inorganic nature (mainly talcum, calcium carbonate, silica, carbon black, kaolin, aluminium trioxide). Some fillers make it possible to obtain a reinforcing effect, with increase in the ultimate strength, extensibility, and tear strength of the product.

The main commercially available reinforcing fillers are carbon black (CB), silica, and calcium carbonate.

Of all the minerals having a reinforcing effect, only a small amount thereof, however, derive from sustainable sources, i.e., materials with low environmental impact, that favour energy saving, are atoxic and do not derive from synthesis of chemical substances but from natural and renewable resources.

Carbon black has been widely used in rubber-based compositions in order to improve the mechanical properties thereof. This filler, however, is generally produced by combustion of heavy oil products and, as such, is costly and far from eco-sustainable.

Silica is used as reinforcing filler in particular in the tyre-manufacturing sector in so far as it bestows specific dynamic-mechanical properties, such as lower resistance to rolling friction given the same wear resistance and better adherence on wet surfaces; to exert its reinforcing function, silica is generally used in combination with compatibilizing agents added to the mix, for example organofunctional silanes.

Calcium carbonate is the mineral most widely used for making elastomer-based resilient floorings. Its reinforcing capacity, however, is lower (given the same mass) than that of carbon black and silica. Moreover, the calcium carbonate generally used is mined, with consequent harmful effects in terms of environmental impact, landscape, and eco-sustainability, as well as in terms of costs for manufacture of the end product.

### Object and summary

The object of the present description is to provide floor covering materials that have optimal characteristics in terms of mechanical performance and are at the same time eco-sustainable and inexpensive.

The object referred to above is achieved thanks to the disclosure referred to specifically in the annexed claims, which are understood as forming an integral part of the present description.

The present description provides a floor covering material, a method for producing the aforesaid material, as well as a method for covering a surface with the aforesaid covering material, and a flooring that comprises it.

The claims form an integral part of the technical teaching provided herein in relation to the embodiments.

According to one or more embodiments, a covering material may comprise:
- at least one elastomer;
- a biogenic reinforcing filler, wherein the biogenic reinforcing filler comprises calcium carbonate particles in the form of aragonite.

The above reinforcing filler may further comprise at least one organic compound, preferably conchiolin.

In one or more embodiments, the biogenic reinforcing filler may further comprise calcium carbonate particles in the form of calcite.

In one or more embodiments, the calcium carbonate particles of the biogenic reinforcing filler may have a mean diameter (D50) comprised between 4 um and 400 µm, preferably comprised between 4 um and 200 µm.

The at least one elastomer may be selected in the group consisting of styrene-butadiene rubber (SBR), ethylene-propylene-diene rubber (EPDM), nitrile-butadiene rubber (NBR), natural rubber (NR), and mixtures thereof.

The material subject of the present disclosure makes it possible to provide floor coverings, preferably resilient floorings, which comprise a mineral component of natural origin. In particular, the biogenic reinforcing filler comprising particles of calcium carbonate in the form of aragonite may be obtained from shells of bivalve molluscs. The above reinforcing filler may also be obtained from shells of gastropod molluscs. The mineralized tissues of the shells of the aforesaid molluscs (for example mussels, clams, cockles, oysters, sea snails (Monodonta), limpets, spiny murices, etc.) represent a source of calcium carbonate, the specific crystalline form of which makes it possible to bestow on the covering material properties that are optimal in terms of stiffness, weight, strength, and toughness. Moreover, the particles of calcium carbonate in the form of aragonite described herein enable covering materials to be obtained, in particular resilient floorings, with characteristics improved as compared to covering materials comprising as reinforcing filler mined calcium carbonate, as will be described in what follows.

### Brief description of the figures

One or more embodiments will be described, purely by way of non-limiting example, with reference to the annexed figures, listed below:
- Figure 1 is a schematic illustration of crystalline forms of calcium carbonate (CaCO₃);
- Figure 2 represents the spectra obtained from X-ray diffraction (XRD) of a sample of biogenic CaCOs coming from grinding of shells of molluscs (Sample 1) and of a mined commercial sample of CaCO₃ (Sample 2); the analysis makes it possible to identify the crystalline structures present in the different samples and to trace back to the nature of CaCOs;
- Figure 3 represents the spectra obtained from X-ray diffraction of two samples (Sample 3 and Sample 4) of mined CaCOs;
- Figure 4 represents the result of a thermogravimetric analysis (TGA) conducted on two samples of biogenic CaCOs in order to evaluate variation in weight thereof following upon an increase in temperature. The analysis enables evaluation of the thermal stability and composition of the sample. The organic component present in the sample has a decomposition temperature higher than 500°C; consequently, the content of the organic component comprising conchiolin ranges between 0.5 wt% and 7 wt% with respect to the weight of calcium carbonate;
- Figure 5 represents the Gaussian curve of dimensional distribution of a commercial sample of mined CaCOs compared with three samples of different grain size obtained from biogenic CaCOs.

### Detailed description

In the ensuing description, various specific details are illustrated aimed at enabling an in-depth understanding of examples of one or more embodiments according to the description. The embodiments may be obtained without one or more of the specific details, or with other methods, components, materials, etc. In other cases, known structures, materials, or operations are not illustrated or described in detail so that various aspects of the embodiments will not be obscured. Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in various points of the present description do not necessarily refer to one and the same embodiment. Moreover, particular conformations, structures, or characteristics may be combined adequately in one or more embodiments.

The references used herein are provided only for convenience and hence do not define the sphere of protection or the scope of the embodiments.

The reinforcing filler comprising calcium carbonate particles in the form of aragonite is a biogenic reinforcing filler, where the term "biogenic" used in the context of the present description refers to a material comprising an element, such as carbon, which is renewable over months, years, or decades. In particular, a renewable resource may be defined as an inexhaustible natural resource that may be regenerated by means of natural processes in the scale of "human" times. Non-biogenic (or abiogenic) materials may be non-renewable or else renewable on time scales of centuries or even longer. A method of evaluation and quantification of the energy budgets throughout the life cycle of a product, from acquisition of the raw materials to end of life is the life-cycle analysis (LCA), regulated by the ISO norms of the series 14040.

The biogenic reinforcing filler subject of the present description is a reinforcing filler that comprises biogenic calcium carbonate. The above biogenic calcium carbonate comprises calcium carbonate particles in the form of aragonite and may further comprise calcium carbonate particles in the form of calcite. The above biogenic calcium carbonate may be present in a weight percent comprised between 90 wt% and 98 wt% (w/w) of the biogenic reinforcing filler.

As also pointed out by publications present in the literature, calcium carbonate of biogenic origin has a greater sustainability than mined calcium carbonate (Recommendation on carbon sequestraction by molluscs; Aquaculture Advisory Council AAC 2022-16; A.A. Alonso; X.A. Álvarez-Salgado; L.T. Antelo (2021), Assessing the impact of bivalve aquaculture on the carbon circular economy, Journal of Cleaner Production, Vol. 279, 123873*)*.

Floorings made with biogenic calcium carbonate as reinforcing filler are today of considerable interest in so far as they are more sustainable than similar floorings made with mined calcium carbonate.

There are on the other hand available methods of analysis for identifying a biogenic material comprising carbon. As example reference may be made to the method of analysis of C¹⁴ carbon content, as indicated in the ASTM norm D6866-20 Method B (AMS) or according to what is indicated in the norm EN16640 or the norm ISO 16620-2.

The Inventors of the present disclosure have produced a covering material, preferably for resilient floorings, that comprises at least one elastomer and a biogenic reinforcing filler, where the biogenic reinforcing filler comprises biogenic calcium carbonate particles in the form of aragonite.

The above filler may further comprise particles of biogenic calcium carbonate in the form of calcite.

The biogenic reinforcing filler comprising calcium carbonate particles in the form of aragonite may moreover comprise at least one organic compound, preferably conchiolin, more preferably in an amount comprised between 0.5 wt% and 15 wt%, even more preferably between 0.5 wt% and 7 wt% with respect to the weight of the calcium carbonate particles.

In one or more embodiments, the calcium carbonate particles may have a mean diameter comprised between 4 um and 400 µm, preferably comprised between 4 um and 200 um. The mean diameter is expressed as D50 (median distribution of the diameters of the particles).

The biogenic reinforcing filler, comprising particles of biogenic calcium carbonate in the form of aragonite, may be present in the material in an amount comprised between 5 wt% and 70 wt%, preferably between 10 wt% and 50 wt% with respect to the weight of the covering material.

The biogenic reinforcing filler, comprising biogenic calcium carbonate particles in the form of aragonite, may be present in an amount comprised between 15 wt% and 300 wt%, preferably between 20 wt% and 150 wt% with respect to the weight of the elastomer.

The calcium carbonate used as reinforcing filler in the material forming the subject of the present application is biogenic calcium carbonate, i.e., calcium carbonate of natural origin, which, as anticipated and as will emerge clearly from what follows, presents advantages over mined calcium carbonate, which is today one of the materials most widely used as reinforcing filler in elastomer-based materials.

In particular, one or more embodiments of the present description envisage the use, as biogenic reinforcing filler, of biogenic calcium carbonate contained in the shells of gastropod and/or bivalve molluscs (also known as "mineralized tissue"). Bivalve molluscs may be selected in the group consisting of mussels, clams, cockles, oysters, scallops, and combinations thereof. Gastropod molluscs may be selected in the group consisting of sea snails (Monodonta), limpets, spiny murices, and combinations thereof.

The calcium carbonate particles in the form of aragonite contained in the material forming the subject of the present description may be obtained from shells of bivalve and/or gastropod molluscs subjected to a process that comprises the steps of:
- providing shells of bivalve molluscs, preferably selected in the group consisting of mussels, clams, cockles, scallops, oysters, and combinations thereof, and/or shells of gastropod molluscs, preferably selected in the group consisting of sea snails (Monodonta), limpets, spiny murices, and combinations thereof;
- granulating the shells to obtain a granular material; and
- micronizing the granular material to obtain a powder comprising calcium carbonate in the form of particles of aragonite.

A further advantage deriving from the use of the aforesaid biogenic calcium carbonate is that the shells of molluscs may come from waste of the foodstuff industry; the foodstuff industry of processing of molluscs and seafood generates each year millions of tonnes of shells of molluscs that, following upon consumption of the edible part, are to be disposed of in dumps with code CER 020203 "Waste unusable for consumption or transformation". Classified as refuse, and hence typically disposed of in dumps or dispersed in the sea, the shells of molluscs represent a source of potentially reusable biomaterials, and above all a renewable and highly sustainable source. Various attempts at re-using these materials have been made, however, with complex and costly procedures (for example, by means of pyrolysis) in order to extract the calcium carbonate. The high content of calcium carbonate contained in the shells moreover renders them unusable in composting processes.

The method may comprise a step of washing of the shells, preferably carried out in water, which has the purpose of eliminating salts (for example, sodium chloride, NaCl) and part of residual organic component in such a way as to counter phenomena of decomposition of the material and onset of unpleasant smells. The washing step may be followed by a step of drying of the shells carried out, for example, using hot air. To facilitate drying it is preferable to use a flow of hot air in countercurrent with respect to the material so as to minimize energy consumption.

The step of granulation of the washed shells may be carried out using a simple granulating mill (ball mill or hammer mill) and enables a granulated material to be obtained comprising particles the size of which is between 0.1 mm and 10 mm.

The step of micronization of the granulated material may be carried out using a disk or hammer micronization mill suitable for minerals with low abrasiveness. The closed-circuit production process enables separation of the material of suitable grain size using sieves and makes it possible to obtain particles of calcium carbonate the size of which is comprised between 4 um and 400 µm, preferably between 4 um and 200 um. The biogenic reinforcing filler may comprise, preferably be consisting of, a powder of shells of bivalve and/or gastropod molluscs, where preferably the mean size of the particles is comprised between 4 µm and 400 µm, more preferably between 4 um and 200 um.

The Inventors of the present application have identified conditions of optimal use of the biogenic reinforcing filler - in particular the specific weight ratio with respect to the weight of the elastomer (from 15 wt% up to 300 wt% of the weight of the elastomers, preferably from 20 wt% to 150 wt%), as likewise the particle size of the filler - to obtain a floor covering material characterized by a specific combination of properties such as stiffness, contained weight, strength and toughness.

As surprisingly noted by the Inventors of the present application, the use of biogenic calcium carbonate instead of mined calcium carbonate may bestow on the covering material for a resilient flooring made of rubber superior mechanical characteristics, thanks to the specific crystalline structure of calcium carbonate, which enables an optimal distribution of the loads and stresses, and thanks to the presence of the protein component (conchiolin). Specifically, shells of molluscs present a hierarchical structure in which protein layers of conchiolin serve as bridge between the different layers of the crystals of biogenic calcium carbonate. The presence of conchiolin and the peculiar structure of the biogenic calcium carbonate enable a greater compatibility with the polymeric matrix, even though the compatibilization mechanism is not today known; it is interesting in any case to highlight the fact that the quality is similar to that obtained with the use, for example, as reinforcing material, of silica added with organosilane compounds. The process of recovery of the biogenic calcium carbonate forming the subject of the present disclosure, not comprising steps of calcination, enables maintenance of the organic fraction and hence use of the compatibilizing effect that derives therefrom.

A feature that distinguishes biogenic calcium carbonate from mined calcium carbonate lies in the different crystalline forms.

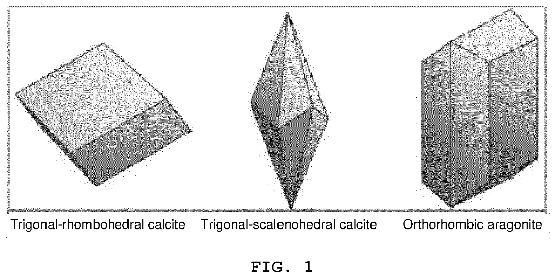

Figure 1 is a schematic illustration of different crystallographic forms of particles of calcium carbonate, such as rhombohedral and hexagonal trigonal calcite and orthorhombic aragonite; each of these crystalline forms can bestow different properties on the end product in which calcium carbonate is used as reinforcing filler.

X-ray diffraction (XRD) is an analytical technique for identifying the structure and the crystals present in a combination of elements, such as minerals in rock. For minerals with variable formulas and structures such as carbonates, the XRD method is widely used for their identification and determination of their proportion in a sample; the spectra moreover identify the specific crystalline form.

As is also known from the literature, a crystalline form of biogenic calcium carbonate coming from the marine/aquatic world is aragonite. In particular, calcium carbonate present in shells of bivalve molluscs presents generally in the form of aragonite; in some cases, it may comprise both aragonite and calcite. Aragonite, also known as a polymorphic compound of calcite, has an unstable crystalline structure with a density higher than that of calcite (3 g/cm³ for aragonite and 2.7 g/cm³ for calcite). The higher density derives from a greater co-ordination of calcium and hence from a more compact crystal lattice; it has its range of stability at a higher pressure and a lower temperature, these being requisites that are found mainly in water, where bivalve molluscs are reared.

Mined calcium carbonate is mainly consisting of calcite and other mined crystals, but aragonite in crystalline form is not present. In particular, an analysis was made, using a diffractometer "XPERT Pro", carrying out a scan between 5 ≤ 20 ≤ 80, of the spectra deriving from samples of biogenic calcium carbonate obtained from shells of pulverized molluscs (Sample 1) obtained from a process as described in the foregoing sections and of three commercial samples of calcium carbonate coming from mining sites located in different regions of Italy (Samples 2, 3, 4), as indicated in Table 1.

The results obtained from the different samples (in the form of powder) were compared with the spectra of the pure phases, such as calcite, aragonite, and also ankerite, i.e., a mineral of the group of rhombohedral carbonate, considered as ferromanganesiferous dolomite (of chemical formula Ca(Fe++,Mg,Mn) (CO₃)₂).

**Table 1**

| **Origin of the samples** | |
|---|---|
| Biogenic CaCO₃ (Sardinia) | **Sample 1** |
| Mined CaCO₃ (Tuscany) | **Sample 2** |
| Mined CaCO₃ (Piedmont) | **Sample 3** |
| Mined CaCO₃ (Friuli-Venezia Giulia) | **Sample 4** |

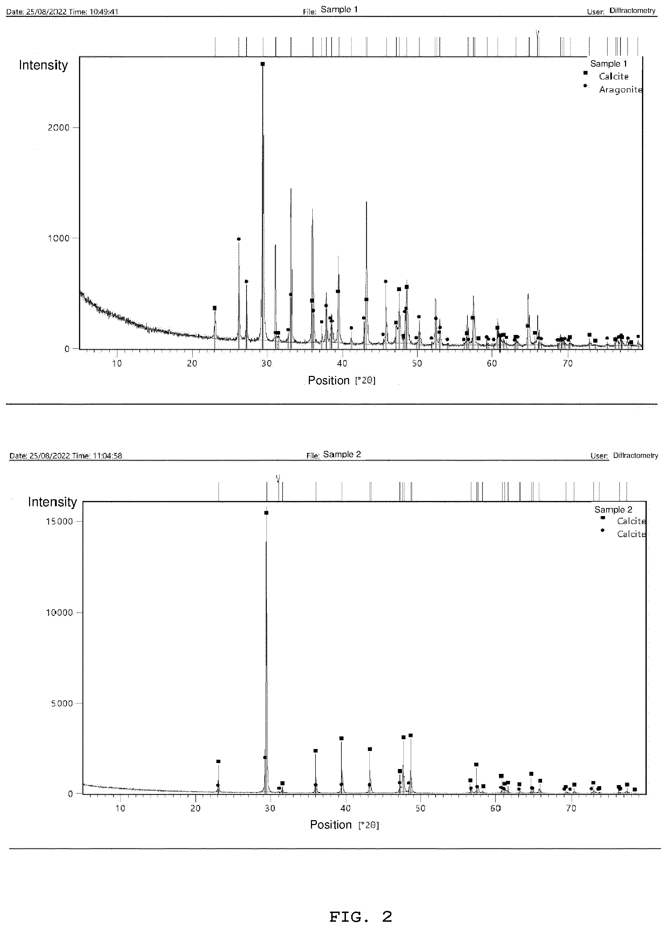

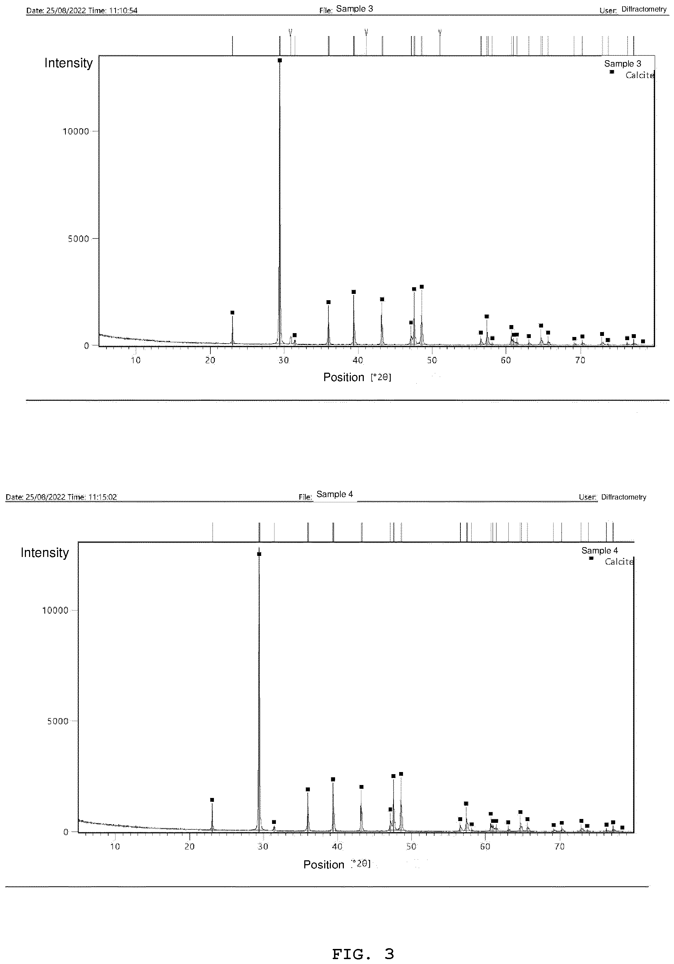

The result of the diffractograms represented in Figure 2 (for Samples 1 and 2) and in Figure 3 (for Samples 3 and 4) show that aragonite is present only in the sample of biogenic calcium carbonate forming the subject of the present disclosure (Sample 1).

In addition to calcium carbonate as main constituent (calcium carbonate is comprised between 90 wt% and 95 wt% of the weight of the shell), shells of molluscs also comprise calcium phosphate (hydroxyapatite) and conchiolin as protein compound. The presence of organic substance in calcium carbonate extracted from shells further characterizes the biogenic reinforcing filler present in the material described herein. The biogenic calcium carbonate contained in the covering material forming the subject of the present disclosure, which can be obtained from granulation and micronization of the shells previously washed in fresh water and dried, is not subjected to any process of extraction or leaching and may have a content of organic biological substance. The content of organic substance may be comprised between 0.5 wt% and 15 wt%, more frequently between 0.5 wt% and 7 wt%, with respect to the total weight of calcium carbonate.

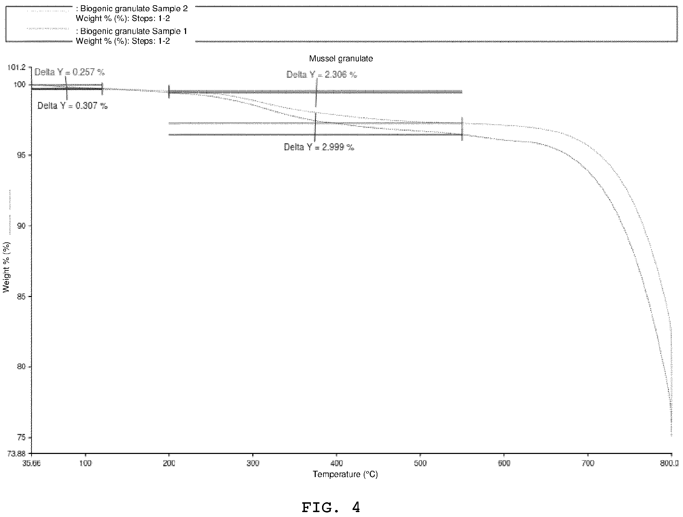

The Inventors of the present application have conducted a thermogravimetric analysis (TGA) on samples of biogenic calcium carbonate extracted from shells of bivalve molluscs as described in the foregoing sections. The results are illustrated in Figure 4, where the presence of organic biological substance is visible from the thermogram as loss of weight of the sample in the range of temperatures lower than 200°C (the loss of weight of the sample due to degradation of calcium carbonate occurs at higher temperatures, beyond 500°C).

In one or more embodiments, the elastomer contained in the material forming the subject of the present disclosure may be selected in the group consisting of synthetic rubbers, such as styrene-butadiene rubber (SBR), ethylene-propylene-diene rubber (EPDM), nitrile-butadiene rubber (NBR), natural rubber (NR), thermoplastic elastomers (TPE), thermoplastic-vulcanizate elastomers (TPV), mixtures thereof.

In one or more embodiments, the material may further comprise powder recycled from vulcanized mixes (swarf resulting from the production process). This powder may comprise a vulcanized and shredded mix of SBR/NR elastomers, fillers and additives, where generally the elastomers make up 30 wt% of the mix.

In one or more preferred embodiments, the at least one elastomer may comprise styrene-butadiene rubber or ethylene-propylene-diene rubber.

In one or more embodiments, the at least one elastomer may be contained in the material in an amount comprised between 10 wt% and 70 wt%, preferably between 10 wt% and 50 wt% (w/w).

Preferably, the covering material comprises the biogenic reinforcing filler in an amount comprised between 15 wt% and 300 wt%, preferably between 20 wt% and 150 wt%, with respect to the weight of the elastomer.

In one or more embodiments, the covering material may comprise a further reinforcing filler compatible both with synthetic rubbers and with natural rubbers. The further reinforcing filler may be selected in the group consisting of kaolin, carbon black, silica, and aluminium trioxide. The further reinforcing filler may be contained in the material in an amount comprised between 1 wt% and 50 wt% with respect to the weight of the elastomer.

In one or more embodiments, the material described may contain chemical additives, also referred to as "process adjuvants", useful for controlling the viscosity and workability of the material in industrial plants.

In one or more embodiments, the covering material may comprise a crosslinking system: sulphur and, possibly, zinc oxide and accelerators, sulphur donors, or peroxide crosslinking agents (such as dicumyl peroxide or t-butyl peroxide) or a combination of the three processes cited.

In one or more embodiments, the covering material may comprise at least one crosslinking accelerator. The crosslinking accelerators may be selected, for example, in the group consisting of cyclohexyl-benzothiazole sulphenamide (CBS, CAS number 95-33-0), tetramethylthiuram disulphide (TMTD, CAS number 137-26-8), mercapto benzothiazole (MTB, CAS number 149-30-4), zinc dibutyl dithiocarbamate (ZDBC, CAS number 136-23-2), or other accelerators of the same families (sulphenamides, thiurams, thiazoles, carbamates).

The covering material may moreover comprise at least one plasticizer compound. Plasticizer compounds may be selected in the group consisting of esters of phthalic acid, esters of phosphoric acid, adipates, sebacates, aliphatic and aromatic oils, antiozonant and dispersing waxes, polyethylene glycol (PEG), esters of fatty acids, metallic soaps (for example, calcium and zinc stearates), zinc oxide and stearine, reinforcing resins, mixtures of oils of natural origin, possibly epoxidates, and promoters or inhibitors of adhesion. Plasticizer compounds may be contained in the material in an amount comprised between 0 wt% and 130 wt% with respect to the weight of the elastomer.

The covering material may moreover comprise at least one compatibilizing compound preferably selected in the group consisting of mercaptosilanes, vinyl silanes, cumarone, resins and/or waxes deriving from hydrocarbons (such as resins referred to as benzofuranic, cumaronic, aliphatic hydrocarbon resins, commonly known as "C5 resins", "C9 resins", or "C5/C9 resins"), long-chain fatty acids, preferably stearic acid and oleic acid and mixtures thereof. The compatibilizing compounds may be contained in the material in a weight percent comprised between 0 wt% and 10 wt% with respect to the weight of the elastomer.

In one or more embodiments, the covering material may moreover comprise organic or inorganic pigments, preferably selected in the group consisting of titanium oxide, iron oxide, chromium oxide, phthalocyanine, and pyrrole pigments.

The material may moreover comprise at least one antioxidant preferably selected in the group consisting of phenolic antioxidants preferably in a weight percent comprised between 0.5 wt% and 5 wt% with respect to the weight of the elastomer.

The present disclosure moreover provides a method for producing the covering material, which comprises the steps of:
- providing at least one elastomer, preferably selected in the group consisting of synthetic rubbers such as styrene-butadiene rubber (SBR), ethylene-propylene-diene rubber (EPDM), nitrile-butadiene rubber (NBR), natural rubber (NR), and mixtures thereof;
- providing at least one biogenic reinforcing filler comprising biogenic calcium carbonate particles in the form of aragonite;
- mixing said at least one elastomer and said at least one biogenic reinforcing filler to obtain a homogeneous composition; and
- optionally adding to said composition at least one further component selected from among at least one further reinforcing filler, crosslinking accelerators, expansion accelerators, plasticizers, pigments, compatibilizing agents, and antioxidants. The biogenic reinforcing filler may consist of a powder of shells of bivalve and/or gastropod molluscs.

The method may moreover comprise a further step of extrusion and/or calendering of the composition in order to obtain the covering material, for example, in sheet form.

In one or more embodiments, the step of providing the at least one biogenic reinforcing filler comprising calcium carbonate particles in the form of aragonite, comprises the steps of:
- providing shells of bivalve and/or gastropod molluscs, preferably selected in the group consisting of mussels, clams, cockles, scallops, oysters, sea snails (Monodonta), limpets, spiny murices, combinations thereof;
- washing the shells;
- granulating the shells that have undergone washing to obtain a granular material;
- micronizing the granular material to obtain the reinforcing filler in the form of powder comprising particles of calcium carbonate in the form of aragonite.

The step of mixing the elastomer and the biogenic reinforcing filler may be conducted using mixers in which the at least one elastomer and the at least one biogenic reinforcing filler are first incorporated in only one step or a number of consecutive steps, optionally with the addition of at least one further reinforcing filler, crosslinking and/or expansion accelerators, plasticizers, pigments, and antioxidants.

Consequently, one or more embodiments of the present disclosure have as subject a flooring that comprises the covering material described herein.

In one or more embodiments, the covering material, preferably in sheet form, can be applied directly on a surface to be covered. In one or more embodiments, the material can be applied on a substrate (of a known type), which is in turn applied directly on a surface to be covered (for example, the surface of a flooring). Application on the surface to be covered or on a substrate may occur by means of technique, for example, of gluing or mechanical fixing. These application techniques are to be deemed known and such as not to require a detailed description herein.

In one or more embodiments, the material may be produced in laminar form, preferably with a thickness comprised between 1 mm and 15 mm. It will be appreciated on the other hand that the solution described herein is also suited to the production of the material in the form of tiles. One or more layers of the material described may be laid on top of one another or coupled together using known technologies. The covering material in sheet or tile form may moreover be laid on top of, or coupled to, other covering materials, for example selected from among at least one of the following: (i) layer of felt or of non-woven fabric made of impregnated glass fibre in order to add dimensional stability and strength; (ii) layer of linoleum or PVC; (iii) layer of cork core; (iv) layer of natural or synthetic rubber core; (v) supporting or treading layer made of natural or synthetic rubber (whether vulcanized or not), where the flooring may be designed to be laid down free without adhesive; and (vi) a pressure-sensitive adhesive layer. Any one of the layers may be impregnated or coated with a resin, a film, or an elastomeric material.

In one or more embodiments, preferably in the case of sports applications, the covering material forming the subject of the present disclosure may present in the form of expanded material in order to improve the absorption of impact and soundproofing, or else to reduce the possibility of transferring defects of the surface of the underfloor.

### Example 1 - Preparation of the biogenic reinforcing filler comprising calcium carbonate particles in the form of aragonite

In what follows, an example is provided of preparation of the biogenic reinforcing filler in the form of powder of shells of bivalve molluscs.

The first step for obtaining the biogenic calcium carbonate starting from shells of molluscs after consumption of the edible part (to be dumped because they are not edible), is to obtain a product (represented by the shells deprived of the edible part) that is dry, odourless, and has a content of the organic part of less than 5 wt% of the shells.

The step of grinding of the shells may envisage two steps: a first step of granulation to obtain particles with a diameter of 1 mm; and a second step of micronization to obtain a powder with particles of a grain size of less than 40 µm and suitable for production of resilient floorings.

### Example 2 - Preparation of the covering material

In what follows (Table 2), a non-limiting illustrative example of composition of the covering material according to the present description is provided.

**Table 2**

| | | |
|---|---|---|
| | | |

| **Type of substance** | **Chemical substance** | **weight (wt) %** |
|---|---|---|
| Elastomer | Natural rubber and SBR | 30 |
| Powder of recycled vulcanized mixes (swarf resulting from the production process) | Vulcanized and ground mixture of SBR/NR elastomers, fillers, and additive | 10 |
| Biogenic reinforcing filler | Biogenic calcium | 25 |
| (Powder of shells of bivalve molluscs) | carbonate | |
| Further reinforcing filler | Mixture of kaolin, carbon black, and silica | 17 |
| Process additives | Compatibilizing agents, dispersing agents, plasticizers | 11 |
| Accelerators | Sulphur, zinc oxide | 5 |
| Pigments | Titanium dioxide | 2 |

Reported in what follows is an example of the process of preparation of the material described.

To process high-viscosity polymers like the ones provided in Table 2 a discontinuous mixer is used consisting of a hopper, inserted in which are first the polymers and the plasticizer and subsequently the reinforcing fillers and the accelerators. A piston pushes the materials into the mixing chamber, where two counter-rotating rotors are present that carry out the mixing action. The rotors generate a great deal of friction with the material, the temperature of which rises rapidly: it is important for the vulcanization temperature not to be reached. The mix obtained is discharged through an opening on the bottom of the mixing chamber and sent on to the subsequent processing step.

Next, the mix passes through a calender that defines the dimensions in terms of thickness and width of the sheet obtained. This sheet may be used by itself or else in a subsequent step coupled to a further sheet in order to provide the desired characteristics. The sheet thus made is ready for a vulcanization process that may occur in different ways: passage in hot-air oven or through a hot press, vulcanization in autoclave, vulcanization in bath of salts.

### Example 3 - Comparison tests

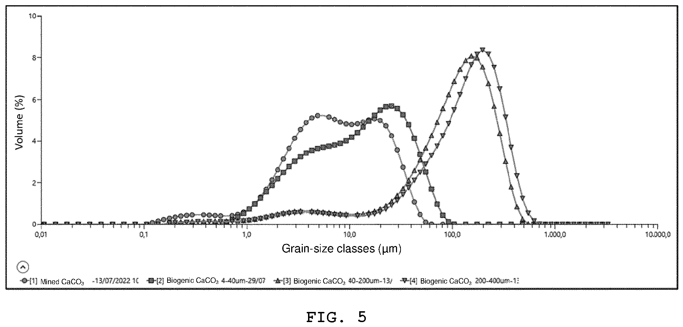

Use of biogenic calcium carbonate instead of mined calcium carbonate it bestows on a flooring made of rubber superior mechanical characteristics, thanks to the specific crystalline structure of calcium carbonate, which enables an optimal bidirectional distribution of the loads and stresses. These improvements are favoured also by the presence of conchiolin (approximately 2 wt% with respect to the weight of the biogenic carbonate), i.e., the organic component in the biogenic calcium carbonate, which functions as very flexible and elastic biopolymer matrix. This component constitutes the environment in which the crystals of aragonite (metastable form of calcium carbonate) nucleate and grow, and precisely the conformation of the environment at a molecular level (due to the shape and arrangement of the macromolecules of conchiolin) favours the formation of crystals of aragonite instead of calcite. The conchiolin fibres moreover provide a flexible support for the mineral particles that are aggregating and contribute to determining the strength of the end product. Four mixes were obtained with the same composition and granulometric distribution as those indicated in Figure 5, and the same method as the one described in Example 2 was carried out; the calciumcarbonate content was fixed at 25 wt%, and the results obtained were compared.

The dimensional characteristics of calcium carbonate and, in particular, the dimensional distribution, were measured using laser diffraction. With this technique the size of the particles of a powder are measured as diameter of a sphere having a volume equivalent to the volume of the particle. Normally a granulometric distribution is hence characterized by the diameters D10, D50 and D90, which represent the size of the particles (in microns) below which there are present 10%, 50%, and 90% of the samples analyzed.
**1.** mined calcium carbonate with particle size D50 = 4 µm and D90 = 40 µm
**2.** biogenic calcium carbonate with particle size D50 = 4 µm and D90 = 40 µm
**3.** biogenic calcium carbonate with particle size D50 = 40 µm and D90 = 200 µm;
**4.** biogenic calcium carbonate with particle size D50 = 40 µm and D90 = 200 µm.

**Table 3**

| | | **Max load (MPa) ASTM D412** | **Extensibility (%) ASTM D412** | **Ka IAAF** (%) |
|---|---|---|---|---|
| **1)** | **Mined CaCO₃** | 1.3 | 266 | 41 |
| | **4µm ≤ ø ≤ 40µm** | | | |
| **2)** | **Biogenic CaCO₃** | 1.65 | 322 | 42 |
| | **4µm ≤ ø ≤ 40µm** | | | |
| **3)** | **Biogenic CaCO₃** | 1.5 | 311 | 41 |
| | **40 µm ≤ ø ≤ 200µm** | | | |
| **4)** | **Biogenic CaCO₃** | 1.4 | 333 | 41 |
| | **200µm ≤ ø ≤ 400µm** | | | |

The results of the experiments highlight a significant reinforcing effect of both biogenic carbonate with D90 = 40 µm and biogenic carbonate with D90 = 200 µm (Table 3).

The material with D90 = 40 µm makes it possible to obtain an increase in the ultimate strength of 15% and in extensibility of 30% as compared to the use of mined carbonate, without jeopardizing the result of Ka. This result is significant and affords a significant reduction in cost of the formulations or a significant improvement of the properties, given the same cost.

The material with D90 = 200 µm enables mechanical characteristics to be achieved that are comparable with mixes formulated with mined calcium carbonate with D50 = 4 µm, i.e., 30 times finer: this results in a significant reduction in the cost and environmental impact of the product.

## Claims

1. Floor covering material comprising:
- at least one elastomer;
- a biogenic reinforcing filler comprising calcium carbonate particles in the form of aragonite.

2. Floor covering material according to claim 1, wherein the at least one elastomer is selected in the group consisting of styrene-butadiene rubber (SBR), ethylene-propylene-diene rubber (EPDM), nitrile butadiene rubber (NBR), natural rubber (NR), thermoplastic elastomers (TPE), thermoplastic-vulcanizate elastomers (TPV), mixtures thereof.

3. Floor covering material according to claim 1 or claim 2, wherein the at least one elastomer is contained in an amount comprised between 10% and 70% by weight, preferably between 10% and 50% by weight (w/w %) of the covering material.

4. Floor covering material according to any one of the preceding claims, wherein the biogenic reinforcing filler comprising calcium carbonate particles in the form of aragonite is contained in an amount between 50 and 70% by weight, preferably between 10% and 50% by weight (% w/w) of the covering material.

5. Floor covering material according to any one of the preceding claims, wherein the particles of calcium carbonate have a mean diameter comprised between 4 um and 400 µm, preferably between 4 um and 200 µm.

6. Floor covering material according to any one of the preceding claims, wherein the biogenic reinforcing filler is present in an amount between 15% and 300% (% w/w), preferably between 20% and 150% (% w/w) relative to the weight of the at least one elastomer.

7. Floor covering material according to any one of the preceding claims, wherein said biogenic reinforcing filler comprises, preferably consists of, a powder of shells of molluscs, wherein the molluscs are more preferably selected from among bivalve molluscs, gastropod molluscs, mixtures thereof.

8. Floor covering material according to claim 7, wherein the bivalve molluscs are selected in the group consisting of mussels, clams, cockles, oysters, scallops, and wherein the gastropod molluscs are selected in the group consisting of sea snails (Monodonta), limpets, and spiny murices, mixtures thereof.

9. A method for producing a floor covering material according to any one of claims 1 to 8, comprising the steps of:
- providing at least one elastomer;
- providing at least one biogenic reinforcing filler comprising biogenic calcium carbonate particles in the form of aragonite;
- mixing said at least one elastomer and said at least one reinforcing filler comprising biogenic calcium carbonate particles in the form of aragonite.

10. Method according to claim 9, wherein the step of providing at least one biogenic reinforcing filler comprising calcium carbonate particles in the form of aragonite comprises:
- providing shells of bivalve molluscs, preferably selected in the group consisting of mussels, clams, cockles, oysters, and scallops, and/or of gastropod molluscs, preferably selected in the group consisting of sea snails (Monodonta), limpets, spiny murices, combinations thereof;
- granulating said shells to obtain a granular material;
- micronizing said granular material to obtain the reinforcing filler in the form of powder comprising carbonate particles in the form of aragonite.

11. Method for covering a surface, the method comprising applying on said surface a covering material according to any one of claims 1 to 8.

12. Resilient flooring comprising a covering material according to any one of claims 1 to 8.
